# EUROPEAN PATENT APPLICATION

(11) **EP 4 502 896 A1**
(43) Date of publication of application: **05.02.2025**
(21) Application number: 23189171.4
(22) Date of filing: 02.08.2023
(51) Int. Cl.: G06Q 10/0833, G06Q 10/083

(54) **METHOD FOR PROVIDING AND TRACKING SAMPLES OF A CHEMICAL PRODUCT**

(71) Applicant: BASF SE, 67056 Ludwigshafen am Rhein (DE)
(72) Inventor: Bauer-Borger, Gerd, 67061 Ludwigshafen am Rhein (DE); Jung, Andreas, 67061 Ludwigshafen am Rhein (DE); Kattenbeck, Hannes, 67061 Ludwigshafen am Rhein (DE); Gross, Sascha, 67061 Ludwigshafen am Rhein (DE); Wingerter, Sebastian, 67061 Ludwigshafen am Rhein (DE)
(74) Representative: Eisenführ Speiser

(57) **Abstract**

The invention refers to a method for providing and tracking chemical samples. The sample is to be utilized in a sample testing procedure performed by a specific test operator. A request for providing a sample is received comprising operator data indicative of an operator identifier uniquely identifying the test operator. A sample identifier is generated associated with and uniquely identifying the requested sample. The operator identifier is assigned with the generated sample identifier to distinctively associate the requested sample with the test operator. On receiving a predefined shipping event associated with the sample identifier, safety data associated with the sample is provided, via a digital communication path, to the test operator based on the sample identifier and the association between the sample identifier and the operator identifier.

## Description

### FIELD OF THE INVENTION

The invention refers to a computer-implemented method, apparatus and computer program product for providing and tracking samples of a chemical product. Further, the invention refers to a computer-implemented method, apparatus and computer program product for performing a testing procedure on a sample of a chemical product.

### BACKGROUND OF THE INVENTION

In today's chemical industries all systems and methods are configured for producing, processing and shipping huge amounts of chemical products. For example, producing, processing and shipping a few tons of a specific requested polymer foam are no problem for the respective chemical industries with respect to fulfilling the shipping and security requirements. However, in some situations instead of the respective huge amounts it is necessary to provide a customer with only a small testing sample of a chemical product. For this, the processes and procedures in the chemical industries are often not practical.

### SUMMARY OF THE INVENTION

It is an object of the present invention to provide a method, apparatus and computer program product that allows for a more reliable and hence safe handling of chemical sample products.

In a first aspect a computer implemented method is presented for providing and tracking samples of a chemical product provided by a producer of the chemical product, wherein the sample is to be utilized in a sample testing procedure performed by a specific test operator, wherein the method comprises a) receiving a request for providing a sample of a chemical product for a sample testing procedure, wherein the request comprises operator data indicative of an operator identifier uniquely identifying the test operator performing the testing procedure of the sample, b) generating a sample identifier associated with and uniquely identifying the requested sample, c) assigning the operator identifier with the generated sample identifier to distinctively associate the requested sample with the test operator, d) on receiving a predefined shipping event associated with the sample identifier and indicating a predetermined shipping step is completed by the sample, providing, via a digital communication path, safety data associated with the sample to the test operator based on the sample identifier and the association between the sample identifier and the operator identifier.

Since the method comprises generating a sample identifier associated with and uniquely identifying the requested sample and assigning the operator identifier with the generated sample identifier to distinctively associate the requested sample with the test operator, a one-on-one correspondence of the provided sample with the test operator can be guaranteed. This allows that important information on the sample, in particular, safety data, can reliably be provided to the test operator which handles the sample during the testing procedure. Thus, the secure handling of the sample can be improved. Moreover, in many cases safety regulations only allow the handling of a chemical sample if respective safety data on the chemical sample is verifiable available to the test operator, e.g., handler of the sample, personally. Since the method comprises providing via a digital communication path safety data to the test operator based on the one-on-one correspondence of the sample with the test operator, it can be guaranteed that the safety data is digitally and verifiably available to the test operator shortly before arrival of the chemical sample. Thus, the chemical sample can directly handled and used by the test operator in a safe manner. Further, since the providing of the safety data to the specific test operator is triggered based on a predefined shipping event and thus automatically performed, for instance, by the producer of the chemical product, it is not necessary for the test operator to perform any additional steps after requesting the sample, for instance, the test operator does not have to specifically request safety data, etc. Accordingly, the process of requesting a test sample and performing a testing procedure is simplified for the test operator, again increasing the reliability and security of the handling of the testing sample and the testing procedure.

The method is a computer-implemented method that can be performed by a general or a dedicated computing hardware, for instance, by a respective configuration of the hardware or by an implemented software. The method can be performed by or is part of a resource planning system of an industrial plant, for example, a chemical plant, linked to a Customer Relationship Management (CRM) platform. For instance, the resource planning system can utilize an SAP platform. However, the method can also be implemented independent of a respective resource planning system or can be provided with respective interfaces to interchange data with resource planning systems.

The method is configured for providing and tracking samples of a chemical product provided by a producer of the chemical product. The chemical product can be any product that is produced by the chemical industries. The chemical product refers to a product that is produced predominantly utilizing chemical processes. Moreover, the chemical product can refer to one of three general classes of products, a) a basic chemical like acids, alkaloids, salts, organic chemicals, etc. forming the basis of chemical processes, b) further use chemicals that are used in further manufacturing processes for producing a consumer product and c) a consumer product itself, in particular, in the context of drugs, cosmetics, soaps, fertilizers, paints, etc. Generally, the chemical product can be a molecule, a formulation, a mixture and can take a plurality of physical structure forms, for instance, a fluid, a gas, a metal, a solid, a crystal, or combinations thereof, like foams. A sample of a chemical product is a portion of the chemical product that is selected from a larger plurality of the chemical product. Thus, the sample is a limited quantity of the chemical product which is intended to be similar to the chemical product and to represent the chemical product in the to be performed testing procedure. The quantity of the sample generally depends on a plurality of considerations, for instance, the amount needed to perform the intended testing procedure, the amount of chemical product available, safety considerations for respective amounts of chemical product, legal provisions, etc.

In a first step the method comprises receiving a request for providing a sample of the chemical product for the sample testing procedure. The request can be received per any known computational communication pathway. For example, the request can be received via a provided user interface which can be utilized, for instance, by a test operator, to input the request e.g. via a CRM platform / customer portal. However, the request can also be already stored on a respective database and can be received by accessing the database. Since the request refers to providing a sample of the chemical product, the request comprises information indicative of the chemical product to be sampled and also the amount of sample requested. Moreover, the request comprises operator data indicative of an operator identity uniquely identifying the test operator performing the testing procedure of the sample. Since the sample for the testing procedure needs to be provided to a specific test operator, i. e. to the specific person performing the testing procedure, the operator data provided by the requests is configured to allow to identify the specific test operator. For example, the operator data can indicate the name and address of the test operator. Based on this information the method can, for instance, access a database and search for an already present operator identifier that is associated with the respective name and address indicated by the operator data. If such operator identifier is not yet present the operator identifier can be generated based on the operator data, for instance, based on the name and address. However, the operator data can also directly comprise a respective operator identifier, for instance, in the case that such an operator identifier has already been generated. The operator identifier can be any data identifier that is associated with a test operator and uniquely identifies the test operator performing the testing procedure of the sample in a respective data system. For example, the operator identifier can be a unique combination of numerical and/or text operators. In an embodiment the operator identifier is a universally unique identifier (UUID). A UUID is a 128-bit label, wherein the uniqueness of the UUID does not depend on a central registration authority or coordination between respective parties generating UUIDs.

In a further step the method comprises generating a sample identifier associated with and uniquely identifying the requested sample. Also, the sample identifier can be any data string that uniquely represents the requested sample in a data system. For example, the sample identifier can be provided in form of numerical and/or text characters identifying the sample in the data system. In an embodiment, the sample identifier is also a UUID. The sample identifier can be generated in an event driven manner, for example, based on receiving an event that indicates that the requested sample has been taken from the chemical product. However, the sample identifier can also be generated before the taking of the requested sample, for instance, the sample identifier can be generated based on the request for providing the sample alone. If the taken sample is associated with a physical identifier for tracking a product, for instance with a barcode, an RFID-chip, or any other kind of physical identifier, the sample identifier can be assigned to the physical identifier of the sample such that the sample identifier is associated with a physical identifier. This provides a one-on-one correspondence between the sample identifier in the data system and the sample in the real world. However, physically identifiers of the sample can also be omitted or replaced by a physical characterizing of the sample in association with a sample identifier.

The operator identifier is then assigned with the generated sample identifier to distinctively associate the requested sample with the test operator. This assigning of the operator identifier with the generated sample identifier provides a one-on-one correspondence between the sample and the test operator represented in the data system.

In a further step safety data associated with the sample is provided to the sample operator based on the sample material identifier and the association between the sample identifier and the operator identifier. In particular, the providing of the safety data is event-driven and performed on receiving a predefined shipping event associated with the sample identifier. The shipping event indicates that a predetermined shipping step is completed by the sample. The shipping event can refer to a completed shipping step during the shipping of the sample. For example, the shipping event can refer to the sample being taken, the sample being packed and ready to be provided to a shipping provider, the sample having reached a predefined destination, or the sample being received by the test operator. In an embodiment the received shipping event is a post goods issue event associated with the sample identifier and indicating the sample has left the producer. Utilizing a post goods issue event as predefined shipping event, has the advantage that the post goods issue event is issued by the resource management system of the producer and thus is independent of the resource management of other parties, for instance, of the shipping provider or the resource management system of the test operator. Moreover, utilizing the post goods issue event as event to drive the providing of the safety data allows the producer to close the respective procedure of the sample-taking and providing in the resource planning system of the producer.

The safety data is then provided via a digital communication path. The digital communication path can be any communication path that is performed by a communication between at least two computing systems. For example, the digital communication path can refer to sending an e-mail, sending a message between two resource planning systems, etc. The safety data can be provided in any digital format that allows to access the safety data, for example, as document, link to a document, data sheet, table, etc. The safety data can refer to any data that is associated with a safe handling of a chemical product. For example, the safety data can comprise safety operational instructions of the chemical product sample, properties of the chemical product sample, composition, or ingredient information of the chemical product, first aid measures, firefighting measures, handling and storage instructions, physical and/or chemical properties, etc. Preferably, the safety data comprises a safety data sheet (SDS) that enlists information relating to the safety of the sample. In particular, a standard specification for safety data sheets of the globally harmonized system of classification and labelling of chemicals can be utilized for generating the safety data sheet.

The safety data is provided based on the sample identifier such that a respective safety data belonging to the sample identifier, i. e. associated with the sample, is provided. Moreover, the association between the sample identifier and the operator identifier allows to uniquely identify where to provide the safety data associated with the sample, in particular, it is ensured that the safety data is provided to the test operator that is identified by the operator identifier. For example, the operator identifier can be further associated with the respective communication pathway (or language version) that should be utilized for providing the data sheet. For example, an e-mail address can be provided as part of the request for operator data but can also be already stored in a respective system and associated with the operator identifier.

In a further aspect of the invention a computer-implemented method is presented for requesting a sample of a chemical product for performing a testing procedure, wherein the sample is provided by a producer of the chemical product, wherein the method comprises a) requesting a sample of the chemical product from the producer of the chemical product, wherein the request comprises operator data indicative of an operator identifier uniquely identifying the test operator performing the testing procedure of the sample, b) receiving based on a predetermined shipping event associated with the sample identifier and indicating a predetermined shipping step is completed by the sample, via a digital communication path, safety data associated with the sample based on the sample identifier and the association between the sample identifier and the operator identifier, and c) generating safety instructions associated with the sample identifier based on the received safety data for performing the testing procedure.

In a further aspect of the invention a computer-implemented method is presented for performing a testing procedure on a sample of a chemical product, wherein the method comprises a) requesting, via a data system associated with a test operator, a sample of the chemical product from the producer of the chemical product, wherein the request comprises operator data indicative of an operator identifier uniquely identifying the test operator performing the testing procedure of the sample, b) receiving, by a data system associated with a producer, a request for providing a sample of a chemical product for a sample testing procedure, wherein the request comprises operator data indicative of an operator identifier uniquely identifying the test operator performing the testing procedure of the sample, c) generating, via a data system associated with a producer, a sample identifier associated with and uniquely identifying the requested sample, d) assigning, via a data system associated with a producer, the operator identifier with the generated sample identifier to distinctively associate the requested sample with the test operator, e) on receiving, by a data system associated with a producer, a predefined shipping event associated with the sample identifier and indicating a predetermined shipping step is completed by the sample, providing, via a digital communication path, safety data associated with the sample to the test operator based on the sample identifier and the association between the sample identifier and the operator identifier, f) receiving, by a data system associated with a test operator, based on a predetermined shipping event associated with the sample identifier and indicating a predetermined shipping step is completed by the sample, via a digital communication path, safety data associated with the sample based on the sample identifier and the association between the sample identifier and the operator identifier, and g) generating, via a data system associated with a test operator, safety instructions associated with the sample identifier based on the received safety data for performing the testing procedure.

In a further aspect of the invention an apparatus is presented for providing and tracking samples of a chemical product provided by a producer of the chemical product, wherein the sample is to be utilized in a sample testing procedure performed by a specific test operator, wherein the apparatus comprises one or more processors configured for performing a) receiving a request for providing a sample of a chemical product for a sample testing procedure, wherein the request comprises operator data indicative of an operator identifier uniquely identifying the test operator performing the testing procedure of the sample, b) generating a sample identifier associated with and uniquely identifying the requested sample, c) assigning the operator identifier with the generated sample identifier to distinctively associate the requested sample with a test operator, d) on receiving a predefined shipping event associated with the sample identifier and indicating a predetermined shipping step is completed by the sample, providing, via a digital communication path, safety data associated with the sample to the test operator based on the sample identifier and the association between the sample identifier and the operator identifier.

In a further aspect of the invention an apparatus is presented for requesting a sample of a chemical product for performing a testing procedure, wherein the sample is provided by a producer of the chemical product, wherein the apparatus comprises one or more processors configured for performing a) requesting a sample of the chemical product from the producer of the chemical product, wherein the request comprises operator data indicative of an operator identifier uniquely identifying the test operator performing the testing procedure of the sample, b) receiving based on a predetermined shipping event associated with the sample identifier and indicating a predetermined shipping step is completed by the sample, providing , via a digital communication path, safety data associated with the sample based on the sample identifier and the association between the sample identifier and the operator identifier, and c) generating safety instructions associated with the sample identifier based on the received safety data for performing the testing procedure.

In a further aspect of the invention an apparatus is presented for performing a testing procedure on a sample of a chemical product, wherein the apparatus comprises one or more processors configured for performing a) requesting, via a data system associated with a test operator, a sample of the chemical product from the producer of the chemical product, wherein the request comprises operator data indicative of an operator identifier uniquely identifying the test operator performing the testing procedure of the sample, b) receiving, by a data system associated with a producer, a request for providing a sample of a chemical product for a sample testing procedure, wherein the request comprises operator data indicative of an operator identifier uniquely identifying the test operator performing the testing procedure of the sample, c) generating, via a data system associated with a producer, a sample identifier associated with and uniquely identifying the requested sample, d) assigning, via a data system associated with a producer, the operator identifier with the generated sample identifier to distinctively associate the requested sample with the test operator, e) on receiving, by a data system associated with a producer, a predefined shipping event associated with the sample identifier and indicating a predetermined shipping step is completed by the sample, providing, via a digital communication path, safety data associated with the sample to the test operator based on the sample identifier and the association between the sample identifier and the operator identifier, f) receiving, by a data system associated with a test operator, based on a predetermined shipping event associated with the sample identifier and indicating a predetermined shipping step is completed by the sample, via a digital communication path, safety data associated with the sample based on the sample identifier and the association between the sample identifier and the operator identifier, and g) generating, via a data system associated with a test operator, safety instructions associated with the sample identifier based on the received safety data for performing the testing procedure.

In a further aspect of the invention a computer program product is presented for providing and tracking samples of a chemical product provided by a producer of the chemical product, wherein the computer program product causes an apparatus as described above to perform a method as described above, when executed on the apparatus.

In a further aspect of the invention a computer program product is presented for requesting a sample of a chemical product for performing a testing procedure, wherein the computer program product causes an apparatus as described above to perform a method as described above, when executed on the apparatus.

In a further aspect of the invention a computer program product is presented for performing a testing procedure on a sample of a chemical product, wherein the computer program product causes an apparatus as described above to perform a method as described above, when executed on the apparatus.

In an embodiment the method further comprises after receiving the request, validating the request and performing the following steps based on the validated request. The validation refers to determining whether the request of the test operator is valid, wherein in most cases the test sample can only be provided to the test operator if the request is valid. Thus, if it is determined that the request is valid the further steps performed by the method are performed based on the validated request. The validation can be performed with respect to a plurality of validation aspects. For example, the validation can be performed with respect to a safety aspect, wherein in this case the validation can determine, for instance, whether the requesting test operator comprises a facility to safely handle the requested sample, whether or not the requesting test operator is authorized to requesting a test sample, etc. However, the validation can also refer to a formal validation of the request checking, for instance, if the required information is provided by the request, for instance, if the request comprises operator data that allows to determine an operator identifier, data distinctively allowing to identify the chemical product from which the sample should be taken, or other informational data that might additionally be utilized for processing the request, for instance, a shipping address, an e-mail address of the test operator, etc. Generally, a predetermined set of rules can be utilized for validation of the request. In an embodiment the validation is based on at least one of the request element, the operator data and the chemical product. Moreover, the method can comprise, if one or more information required for the validation of the request is missing in the request, sending a communication to the test operator indicating the missing information and requesting the missing information. Thus, the validation ensures that all information and data necessary for processing the request is provided and also that a chemical sample is only provided to a test operator that can handle the chemical sample in a secure manner.

In an embodiment the method further comprises utilising a tracking system for tracking the progress of the sample during shipping from the producer to the operator by receiving respective shipping data indicative of shipping events associated with the sample, wherein the shipping data is associated with the sample identifier and the predefined shipping event is part of the shipping data received as part of the tracking of the sample. In an embodiment, the tacking system is a track-and-trace system that allows to track and trace a shipment. The association between a sample identifier and the shipping data can be provided, for instance, by assigning a shipping identifier provided by the tracking system to a sample identifier in a one-to-one correspondence. However, also the sample identifier can be provided to the tracking system such that the tracking system directly utilizes the sample identifier for the tracking.

In an embodiment the method further comprises after receiving the request, generating a request identifier associated with and uniquely identifying the request and assigning the operator identifier and the generated sample identifier to the generated request identifier, wherein the providing of the safety data is further based on the request identifier. The request identifier can again be any identifier that uniquely identifies the requests, in particular, the request identifier can be a UUID. Utilizing a request identifier that is assigned to the sample identifier and operator identifier allows to assign all data that is associated with the request in a unique and distinctive manner to the sample and the sample operator. Moreover, the providing of a safety data further based on the request identifier allows to utilize a request identifier as a kind of envelope identifier for accessing all data related to the request, in particular, also the operator identifier and the sample identifier.

In an embodiment the method further comprises generating safety instructions based on the provided safety data, wherein the testing procedure is performed based on the generated safety instructions. For example, the safety instructions can be provided together with the safety data or can be generated after the safety data has been received. The safety instructions refer to instructions that allow a safe handling and testing procedure of the test sample. For example, safety instructions can refer to storing instructions like a storing temperature, handling instructions like which kind of container can be utilized to handle this chemical sample, testing procedure instructions like indicating safe pressure ranges, temperature ranges, known chemical reactivities, etc. In an embodiment the method further comprises generating control signals usable for controlling and/or monitoring the testing procedure performed utilizing the sample based on the safety data. The control signals can refer to any signals that are interpretable by respective controlling and/or monitoring equipment. For example, the control signals can refer to providing respective safety instructions as described above on an output unit to the test operator that have to be confirmed as having been noted by the test operator. However, the control signals can also be provided to a laboratory equipment performing the testing procedure for controlling and/or monitoring the testing procedure performed utilizing the sample. In this case respective rules and definitions can be utilized that translate the provided safety data, for instance, a safe temperature range, to respective control and/or monitoring procedures performed by the laboratory equipment that ensure that the safety requirements of the chemical sample are followed. For example, the safe temperature range can be translated into a control signal that is implemented into a controlling and/or monitoring of the test procedure such that the test procedure does not utilize a temperature outside of the safe temperature range. In particular, the control signals can be configured to send a message to a test operator if a respective safety requirement is not observed by a test procedure. However, the control signal can also be utilised by the laboratory equipment for controlling and/or monitoring the testing procedure. The utilizing can refer to an implementation of the control signal into the controlling of the laboratory equipment or a unit controlling the laboratory equipment. In this case the control signals can be configured to directly control and/or monitor the testing procedure such that the respective safety requirements are met by the testing procedure. For example, the control signals can be configured to control a heater utilized in the testing procedure such that respective temperature margins for the test sample are not exceeded by the heater.

In an embodiment the method further comprises providing the sample identifier and the operator identifier to a shipping system, wherein the shipping system performs the shipping of the sample based on the sample identifier and the operator identifier. Providing the sample identifier and the operator identifier to the shipping system for performing the shipping of the sample allows to avoid the additional step of assigning a shipping identifier provided by the shipping system to a sample identifier and the operator identifier.

In an embodiment the request further comprises request data indicative of at least one of the chemical product, the testing procedure to be performed, a security level of the laboratory performing the testing procedure. The additional request data can, for instance, be utilized for any of the procedures above, in particular, for validating the request.

In an embodiment the chemical product from which the sample is requested is associated with a chemical product class identifier, wherein the generated sample identifier is assigned to the chemical product class identifier. Also, the chemical product class identifier can be any identifier that uniquely identifies the chemical product from which the sample should be taken. For example, also the chemical product class identifier can be a UUID. Assigning the generated sample identifier to the chemical product class identifier allows to distinctively associate the sample with the chemical product from which it has been taken. In an embodiment the sample identifier can be generated based on the product class identifier. For example, the sample identifier can be generated such that it comprises parts of the product class identifier. The sample identifier can then be indicative of the product class identifier and provide a direct link between the sample and the chemical product form which the sample has been taken. In particular, the safety data associated with the sample is provided based on the association between the sample identifier and the chemical product class identifier.

In an embodiment the method further comprises requesting a result of the testing procedure after a predefined time period based on the sample identifier and the association between the sample identifier and the operator identifier. Requesting a result of the testing procedure allows to receive the testing result from the test operator which can then be utilized in further processes e.g. in Sales & Marketing, Product Development etc. For example, based on the test result the quality of the chemical product from which the sample has been taken can be validated. In some cases, even production processes of the chemical product can be adapted based on the received test result. The unique association between the sample identifier, the test operator and the respectively received result of the testing procedure allows to uniquely and distinctively associate the result of the testing procedure with the chemical product, for instance, in particular, with the batch of the chemical product from which the sample has been taken, such that a validation or adaptation of the production process can be performed based on this distinctive association.

It shall be understood that the methods as described above, the apparatuses as described above and the computer program products as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the present invention may be apparent from and elucidated with reference to the embodiments described hereafter.

### BRIEF DESCRIPTION OF DRAWINGS

- Fig. 1: illustrates a general process for providing samples of a chemical product to a user of a chemical product,
- Fig. 2: shows schematically and exemplarily a system and method for providing, tracking, and testing a sample of a chemical product,
- Fig. 3: shows schematically and exemplarily a flow chart of an embodiment of a method for providing and tracking a sample,
- Fig. 4: shows schematically and exemplarily a flow chart of a further embodiment of a method for providing and tracking a sample of a chemical product, and
- Fig. 5: shows schematically and exemplarily a data structure for using the method for providing and tracking a chemical product sample.

### DETAILED DESCRIPTION OF EMBODIMENTS

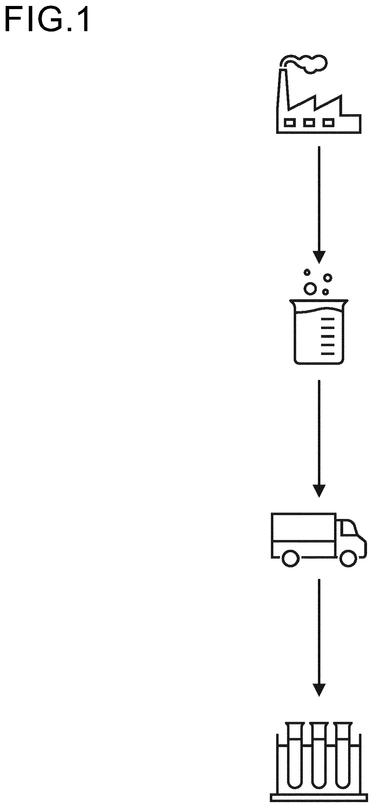

Fig. 1 illustrates a process for providing samples of a chemical product to a user of the chemical product.

A single chemical product may be used for different applications, e.g., 2-Octyl Acrylate (CAS Number: 42928-85-8) can be interesting for a company belonging to Oil & Mining industry and at the same time a company belonging to coatings industry. Applications may include the use of a chemical product to produce a discrete product or a derived chemical product. The chemical product may have properties that may influence the performance in respective applications. Therefore, chemical product samples may be provided to test the use of the chemical product for the respective applications. In particular, potential users of the chemical product can request a testing sample to perform respective testing procedure.

From the viewpoint of the producer of a chemical product, owing to the diverse uses of a chemical product often multiple such test samples need to be provided to multiple users for testing. The samples may be produced by the chemical producer, shipped to the user of the chemical product, and tested for the application by the user of the chemical product as symbolically illustrated in Fig. 1. Chemical products and their samples, however, require safe handling to ensure the user can perform testing procedures in a reliable manner. The methods disclosed herein provide for more reliable and safe handling of chemical products.

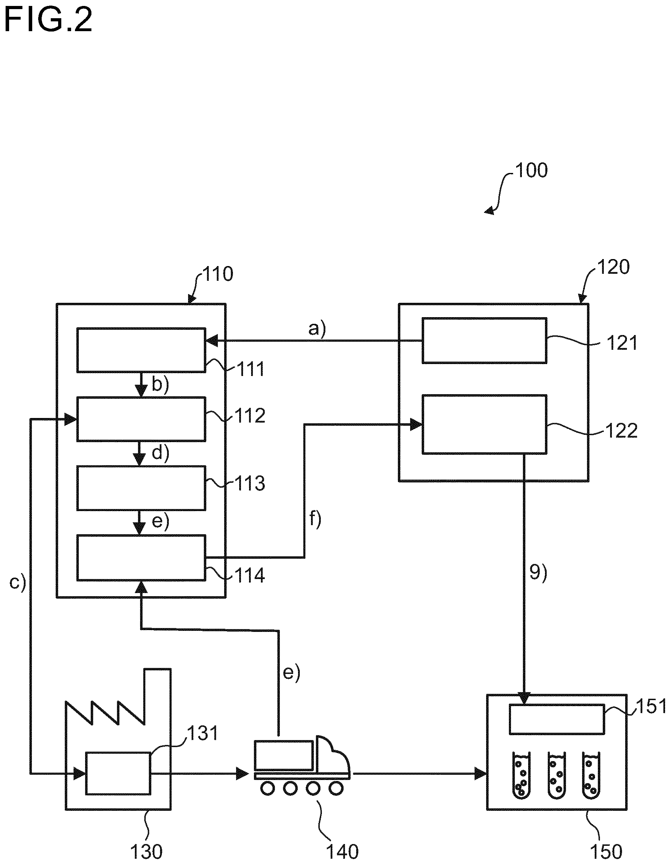

Fig. 2 shows schematically and exemplarily a system for performing a testing procedure on a sample of a chemical product. The chemical product 131 is produced by a producer in an industrial plant 130. The potential customer of the producer comprises a laboratory testing facility 150 in which a sample of the produced product 131 should be tested, for instance, with respect to one or more properties of the chemical product. For performing the testing procedure in the laboratory facility 150 a respective sample of the chemical product 131 must be shipped via a shipping provider 140 to the laboratory facility 150. In this context, the system 100 comprises an apparatus 110 for providing and tracking the sample of the chemical product and an apparatus 120 for requesting a sample of the chemical product. Both the apparatus 110 and the apparatus 120 can be realized in form of any dedicated computational hardware and/or software. The apparatus 110 and 120 are in particular configured to perform respective functions of a method for providing and tracking a sample, and requesting a sample, respectively. For example, the apparatus 110 and 120 can comprise one or more processors or can be realized in form of distributed computing, for example, in a cloud environment. The apparatus 110 can be realized as part of or at least communicatively coupled with a resource planning system of the producer of the product 131, for instance, as part or communicatively coupled with an SAP system of the producer of the chemical product 131. The apparatus 120 can be part of or communicatively coupled with a resource planning system of the potential customer or the laboratory facility 150. However, the apparatus 110 and the apparatus 120 can also be realized as part of or communicatively coupled to the same resource planning system providing different services to producers and customers.

The apparatus 120 then performs a first function of requesting a sample of the chemical product from the producer of the chemical product. In particular, as indicated by a) a request of the apparatus 120 is sent 121, for instance, via a communicative coupling of the apparatus 120 and the apparatus 110 to the apparatus 110 receiving 111 the request. The request comprises operator data indicative of an operator identifier uniquely identifying the test operator performing the testing procedure of the sample in the laboratory facility 150. For example, a name and address of the test operator together with an e-mail address can be provided as part of the request. Further, the request indicates the chemical product 131 from which the sample should be taken and preferably also an amount of the chemical product that should be provided as sample.

After receiving the request 111 the method proceeds as indicated by b) to generating 112 a sample identifier. As indicated by c) the generating of the sample identifier can be performed before, during or after a sample of the chemical product 131 has been taken. For example, after receiving the request a sample can be taken of the chemical product and the process of taking a sample can include indicating in a data system, for example, in the resource planning system, that the sample has been taken, for instance, by scanning a physical identifier of the sample like a barcode. The sample identifier can then be generated based on the received event that the sample has been taken. However, the identifier can also be generated first and then after the sample has been taken assigned to a respective physical identifier of the sample. Moreover, a physical identifier for the sample can also be omitted.

The sample identifier represents the sample of the chemical product 131 in the data system of apparatus 110. In particular, the sample identifier uniquely identifies the sample in the "data world". As indicated by d) the method can then proceed to assigning 113 the operator identifier with the generated sample identifier to distinctively associate the requested sample with the test operator. Thus, the assignment uniquely represents the connection between the sample and the test operator in the data system of apparatus 110.

Moreover, independent of the data procedure performed by apparatus 110 the taken sample will be further processed for shipping, for instance, fully packed, provided to a short-term storage and then provided to a shipping provider 140. The shipping provider 140 then ships the sample to the laboratory facility 150 at which the test operator can perform the testing procedure on the sample. During the shipping process by the shipping provider 140 but also already before being provided to the shipping provider respective shipping data is generated and provided to the apparatus 110 as indicated by e). In particular, respective shipping events like the transfer of the sample from the facility 130 to the shipping provider 140, or the transfer of the sample from the shipping provider 140 to the test operator can be part of the shipping data. Based on a predefined event provided by the shipping data safety data is provided 114 to the apparatus 120 as indicated by f). For example, on receiving a post goods issue event as part of the shipping data associated with the sample identifier, the apparatus 110 utilizes the sample identifier and the association between the sample identifier and the operator identifier to identify where to provide the safety data, for instance, to identify an e-mail address of the test operatorto send the safety data personally to the test operator. The apparatus 120 then receives 122 the safety data. Optionally, as indicated by g) based on the safety data, safety instructions and/or control signals can be generated that can be utilized for controlling and/or monitoring 151 the laboratory testing procedure.

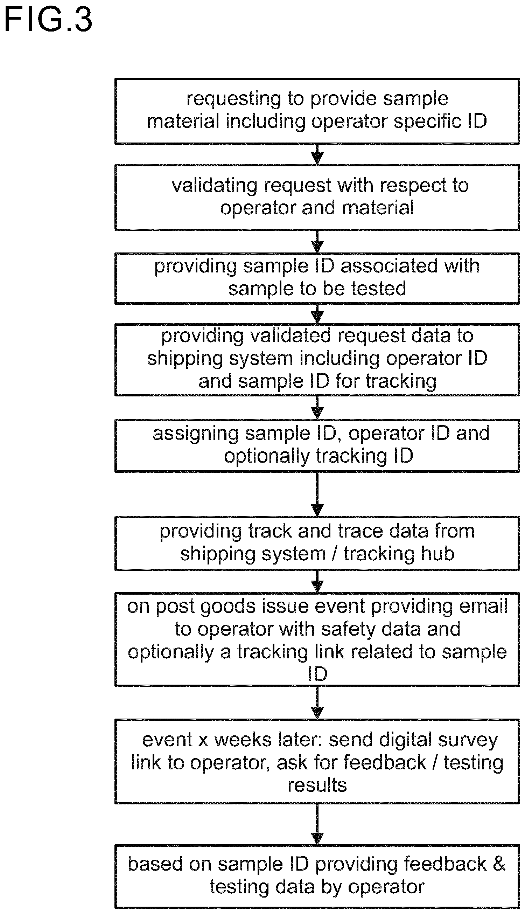

In the following further embodiments of the method described above are described with respect to Fig. 3 to 5. Fig. 3 illustrates shows schematically and exemplarily a flow chart of an embodiment of a method for providing and tracking a sample. In this example, a potential user of a chemical product may request the providing of the chemical product sample of a specific chemical product or product class for testing. The request may include a testing destination for the chemical product, a test operator specific identifier for the operator conducting the testing and the chemical product of interest. The request may be validated based on a material and/or operator specific rule set. For this purpose, an automated approval processes can be configured. For example, the rule set may include rules related to the location / country of the operator, the quantity of sample, industry of the operator, etc.

Further, intelligent filter and validation rules for samples can be utilized during the validation or during providing a request so that only operators can request a sample which can also be delivered, for example, have been verified. Moreover, filters and validation rules can also be provided for sample materials such that only active and dedicated sample materials can be requested or validated, which can later be shipped. For example, outdated or blocked sample materials can be filtered out such that during requesting utilizing a respective request user interface they cannot be selected by a requester.

The validated request may be provided to a shipping system. The validated request may include a testing destination for the sample. In particular, the test operator and specific operator identifier for the test operator conducting the testing may be provided to the shipping system. This way the operator identifier may be used to ship the chemical product sample to its destination with specific reference to the test operator conducting the testing.

Further, the chemical product sample may be related to a sample identifier stored in a data base and uniquely associated with the chemical product sample. The sample identifier can be generated based on the request, when the sample is taken, or at any other time. If a sample is taken before having received the request, for instance, when the sample is stored for later distribution to requesters, the sample identifier can even be generated before the request for the sample has been received. In particular, the operator identifier can the sample identifier can then be associated based on the request.

The shipping system can then receive the unique sample identifier that is optionally also associated with the sample request, and which can also related to the chemical product. This unique sample identifier associated with the sample request and optionally the sample request can then be carried on from the original sample request to the order of the shipping system and to the partner hub for tracking the shipment till confirmed delivery at customer site.

Based on the track and trace data associated with the packaging of the sample, the shipping of the chemical product sample may be monitored. For example, the track and trace data can be associated as shipping data with the sample identifier. The track and trace data may be provided to the test operator conducting the testing. Moreover, the track and trace data may be provided to the chemical producer. The track and trace data may be provided from a third party via a cloud-based streaming service, which can be called via API.

Based on the post goods issue event, the chemical producer may provide safety data associated with handling properties of the chemical product sample to the test operator conducting the testing of the chemical product sample. The safety data may relate to safety operational instruction of the chemical product sample, properties of the chemical product sample, composition/information on ingredients, first-aid measures, fire-fighting measures, handling and storage, physical and chemical properties etc. The safety data may comprise also a safety data sheet and may be provided based on the location of the test operator and the preferred language of test operator sored associated with the operator identifier.

Further, based on the sample identifier optionally associated with the request, in particular, a request identifier, the test operator conducting the testing of the chemical product sample may provide results of the testing of the chemical product sample to the chemical producer. This can also be triggered in an event-based manner. For example, after a predefined number of days or weeks after sending out the sample to the test operator, e.g., the test operator conducting the testing of the chemical product sample may be prompted to provide application data relating to the performance of the chemical product. Moreover, the test operator can also order further support or information based on the sample identifier or based on the request identifier associated with the sample identifier. This request is sent to the linked CRM platform.

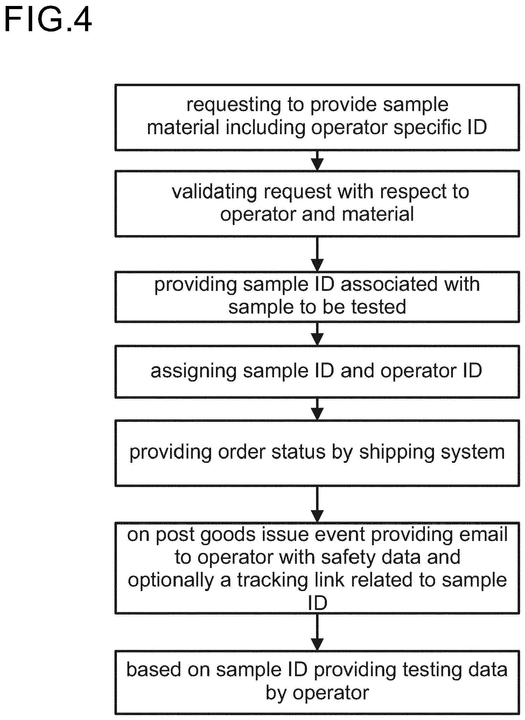

Fig. 4 illustrates schematically and exemplarily flow chart of a further embodiment of a method for providing and tracking a sample of a chemical product. The flowchart of Fig. 4 follows the same principle as the flow chart of Fig. 3. In contrast to Fig. 3 in this embodiment no track and trace data are utilized. Thus, in this case the sample is not tracked during shipping by the shipping provider. However, a respective order status like a post goods issue event can also be provided in this case by the resource planning system of the producer without a track and trace utilized. Moreover, in this embodiment also an automated follow up survey is omitted.

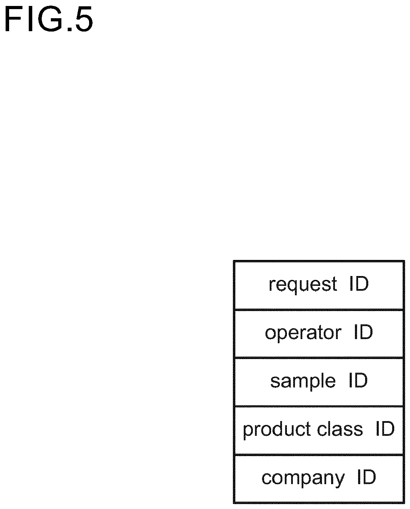

Fig. 5 illustrates an example of a data structure for use in any method for testing a chemical product sample. The data structure can include a unique identifier of the sample request, a unique identifier of the chemical product sample and a unique identifier of the operator. However, the identifier of the sample request can also be omitted. Optionally the data structure can further comprise an identifier of the company conducting the testing, and a product class identifier associated with the chemical product. Via this distinct identification the test operator of the sample for testing the chemical product can be provided with the required safety data in a material specific and targeted manner. This way the safe handling and testing of the chemical product sample can be ensured.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the receiving of the request, the generating of the sample identifier, the assigning of the operator identifier to the sample identifier, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard-wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to a method for providing and tracking chemical samples. The sample is to be utilized in a sample testing procedure performed by a specific test operator. A request for providing a sample is received comprising operator data indicative of an operator identifier uniquely identifying the test operator. A sample identifier is generated associated with and uniquely identifying the requested sample. The operator identifier is assigned with the generated sample identifier to distinctively associate the requested sample with the test operator. On receiving a predefined shipping event associated with the sample identifier, safety data associated with the sample is provided, via a digital communication path, to the test operator based on the sample identifier and the association between the sample identifier and the operator identifier.

## Claims

1. A computer implemented method for providing and tracking samples of a chemical product provided by a producer of the chemical product, wherein the sample is to be utilized in a sample testing procedure performed by a specific test operator, wherein the method comprises:
receiving a request for providing a sample of a chemical product for a sample testing procedure, wherein the request comprises operator data indicative of an operator identifier uniquely identifying the test operator performing the testing procedure of the sample,
generating a sample identifier associated with and uniquely identifying the requested sample,
assigning the operator identifier with the generated sample identifier to distinctively associate the requested sample with the test operator,
on receiving a predefined shipping event associated with the sample identifier and indicating a predetermined shipping step is completed by the sample, providing, via a digital communication path, safety data associated with the sample to the test operator based on the sample identifier and the association between the sample identifier and the operator identifier.

2. The method according to claim 1, wherein the received shipping event is a post goods issue event associated with the sample identifier and indicating the sample has left the producer.

3. The method according to any of claims 1 and 2, wherein the method further comprises after receiving the request, validating the request, and performing the following steps based on the validated request.

4. The method according to claim 3, wherein the validation is based on at least one element of the request, the operator data, and the chemical product.

5. The method according to any of the preceding claims, wherein the method further comprises utilising a tracking system for tracking the progress of the sample during shipping from the producer to the operator by receiving respective shipping data indicative of shipping events associated with the sample, wherein the shipping data is associated with the sample identifier and the predefined shipping event is part of the shipping data received as part of the tracking of the sample.

6. The method according to any of the preceding claims, wherein the method further comprises after receiving the request, generating a request identifier associated with and uniquely identifying the request and assigning the operator identifier and the generated sample identifier to the generated request identifier, wherein the providing of the safety data is further based on the request identifier.

7. The method according to any of the preceding claims, wherein the method further comprises generating safety instructions based on the provided safety data, wherein the testing procedure is performed based on the generated safety instructions.

8. The method according to any of the preceding claims, wherein the method further comprises generating control signals usable for controlling and/or monitoring the testing procedure performed utilizing the sample based on the safety data.

9. The method according to any of the preceding claims, wherein the method further comprises providing the sample identifier and the operator identifier to a shipping system, wherein the shipping system performs the shipping of the sample based on the sample identifier and the operator identifier.

10. The method according to an of the preceding claims, wherein the chemical product from which the sample is requested is associated with a chemical product class identifier, and wherein the generated sample identifier is assigned to the chemical product class identifier.

11. The method according to claim 10, wherein the safety data associated with the sample is provided based on the association between the sample identifier and the chemical product class identifier.

12. The method of any of the preceding claims, wherein the method further comprises requesting a result of the testing procedure after a predefined period of time based on the sample identifier and the association between the sample identifier and the operator identifier.

13. A computer-implemented method for requesting a sample of a chemical product for performing a testing procedure, wherein the sample is provided by a producer of the chemical product, wherein the method comprises:
requesting a sample of the chemical product from the producer of the chemical product, wherein the request comprises operator data indicative of an operator identifier uniquely identifying the test operator performing the testing procedure of the sample,
receiving based on a predetermined shipping event associated with the sample identifier and indicating a predetermined shipping step is completed by the sample, providing, via a digital communication path, safety data associated with the sample based on the sample identifier and the association between the sample identifier and the operator identifier, and
generating safety instructions associated with the sample identifier based on the received safety data for performing the testing procedure.

14. An apparatus for providing and tracking samples of a chemical product provided by a producer of the chemical product, wherein the sample is to be utilized in a sample testing procedure performed by a specific test operator, wherein the apparatus comprises one or more processors configured for performing:
receiving a request for providing a sample of a chemical product for a sample testing procedure, wherein the request comprises operator data indicative of an operator identifier uniquely identifying the test operator performing the testing procedure of the sample,
generating a sample identifier associated with and uniquely identifying the requested sample,
assigning the operator identifier with the generated sample identifier to distinctively associate the requested sample with a test operator,
on receiving a predefined shipping event associated with the sample identifier and indicating a predetermined shipping step is completed by the sample, providing, via a digital communication path, safety data associated with the sample to the test operator based on the sample identifier and the association between the sample identifier and the operator identifier.

15. A computer program product for providing and tracking samples of a chemical product provided by a producer of the chemical product, wherein the computer program product causes an apparatus according to claim 13 to perform a method according to any of claims 1 to 12, when executed on the apparatus.
